# EUROPEAN PATENT APPLICATION

(11) **EP 4 786 226 A1**
(43) Date of publication of application: **05.08.2026**
(21) Application number: 26152177.7
(22) Date of filing: 15.01.2026
(51) Int. Cl.: B60H 1/28

(54) **A COVER ASSEMBLY**

(30) Priority: 29.01.2025 GB 202501296
(71) Applicant: Jaguar Land Rover Limited, Coventry, Warwickshire CV3 4LF (GB)
(72) Inventor: Coelho Leão de Araújo, Erick Jackson, Coventry, CV3 4LF (GB); Rachamalla, Pramod, Coventry, CV3 4LF (GB)
(74) Representative: Jaguar Land Rover Patents Department

(57) **Abstract**

Aspects of the present invention relate to a vehicle sub-assembly comprising a cover assembly and a bonnet. The cover assembly is attached to and at least partially overlaps a portion of the bonnet. The cover assembly comprises a grating and a panel. The grating comprises a plurality of spaced bars that extend in a first direction above an upper surface of the panel, and a rib coupling the bars together. The rib extends below a lower surface of the bars and is arranged so that an upper surface of the rib is disposed flush with or below the upper surface of the panel.

## Description

### TECHNICAL FIELD

The present disclosure relates to a cover assembly, a vehicle sub-assembly comprising the cover assembly and a vehicle comprising the sub-assembly.

### BACKGROUND

It is known to provide vehicle cover assemblies that are attachable to a vehicle body, such as the body of a passenger car. An example cover assembly is a leaf cover. Leaf covers are so called because they prevent leaves and other detritus from passing through gaps in the vehicle body, most commonly the gap between the bonnet and the base of the windscreen of a passenger car.

It is an aim of the present invention to address one or more of the disadvantages associated with the prior art.

### SUMMARY OF THE INVENTION

Aspects and embodiments of the invention provide a cover assembly for a vehicle comprising a grating and a panel, the grating comprising:
a plurality of spaced bars that extend in a first direction above an upper surface of the panel, and
a rib coupling the bars together, the rib extending below a lower surface of the bars and being arranged so that an upper surface of the rib is disposed flush with or below the upper surface of the panel.

By having the rib extend below a lower surface of the bars, the grating provides channels between the bars that are uninterrupted by the rib. The cover assembly may therefore allow for the clean flow of air along the channel.

According to an aspect of the present invention there is provided a vehicle sub-assembly comprising a cover assembly and a bonnet, the cover assembly being attached to and at least partially overlapping a portion of the bonnet, wherein the cover assembly comprises: a grating and a panel, the grating comprising:
a plurality of spaced bars that extend in a first direction above an upper surface of the panel, and
a rib coupling the bars together, the rib extending below a lower surface of the bars and being arranged so that an upper surface of the rib is disposed flush with or below the upper surface of the panel.

Optionally, the rib is spaced from the lower surface of the bars by legs that extend from a first end of each bar between the lower surface and the rib. And, optionally, each leg comprises an extending portion that extends under the respective bar from which the leg depends, and wherein the rib couples together extending portions of adjacent legs. This allows the panel to be inserted between the rib and the bars, forming a stiff sandwich/laminate structure that better resists bending.

Optionally, the rib comprises a plurality of separate connecting elements that extend between adjacent legs. This reduces the amount of material required to form the grating while maintaining grating rigidity.

Optionally, the cover assembly is configured so that the panel is disposed between the rib and the lower surface of the bars. This forms a stiff sandwich/laminate structure that better resists bending.

Optionally, the panel abuts the rib. This additionally increases the stiffness of the cover assembly.

Optionally, the panel comprises a primary panel and a flange that depends at an oblique angle from an edge of the primary panel, and wherein the flange abuts an upper edge of each extending portion of the legs. The flange additionally increases the stiffness of the cover assembly.

Optionally, the rib is integrally formed with the bars. This allows the grating to be simply formed by moulding, additive manufacturing, or any other suitable technique. The grating may be made formed wholly or in part from any suitable polymer, metal or metal alloy.

Optionally, the upper surface of the panel abuts the lower surface of the bars. This allows the upper surface of the panel and facing surfaces of adjacent bars to form channels for the flow of air.

Optionally, the cover assembly comprises fixings that depend from the lower surface of the panel, the fixings extending through apertures in the bonnet to retain the cover assembly to the bonnet. The fixings may be configured to allow the cover assembly to be removed from the bonnet more easily than if the cover assembly were attached to the bonnet by other means, such as adhesive or welding.

Optionally, the fixings comprise resilient elements that are displaceable to allow the fixing to be passed through a respective aperture when the cover assembly is attached to the bonnet. This allows the cover assembly to be attached to the bonnet in two simple steps of: aligning the cover assembly and the bonnet so that the fixings are aligned with the apertures; and pushing the cover assembly down onto the bonnet.

Optionally, the portion of the bonnet overlapped by the cover assembly extends up to a trailing edge of the bonnet. Optionally, the portion of the bonnet overlapped by the cover assembly is a rear portion of the bonnet. This allows the cover assembly to be disposed adjacent the base of the windscreen.

According to another aspect of the invention, there is provided a vehicle comprising the sub assembly.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more embodiments of the invention will now be described, by way of example only, with reference to the accompanying drawings, in which:
Figure 1 shows a vehicle comprising a sub-assembly in accordance with an embodiment of the invention;
Figure 2 shows a cover assembly of the sub-assembly;
Figure 3A is an exploded detail view of the cover assembly;
Figure 3B is a detail view of the cover assembly;
Figure 4 is an exploded view of a cover assembly in accordance with an embodiment of the invention;
Figure 5 shows the cover assembly of figure 4;
Figure 6 is a detail view of a grating of the cover assembly of figure 4;
Figure 7 is a cross section of the sub-assembly shown in figure 1;
Figure 8 shows a vehicle comprising a sub-assembly in accordance with an embodiment of the invention;
Figure 9 is a cross section of the sub-assembly shown in figure 8; and
Figure 10 is a cross section of a sub-assembly in accordance with an embodiment of the invention..

### DETAILED DESCRIPTION

The present disclosure relates to a cover assembly, a vehicle sub-assembly comprising the cover assembly and a vehicle comprising the sub-assembly.

As used herein, the terms 'x-direction', 'y-direction' and 'z-direction' denote, respectively, a longitudinal direction, a transverse direction and a vertical direction. By 'longitudinal direction' it is meant a horizontal direction that extends between the front and rear of the vehicle, wherein the term 'front of the vehicle' is given its normal definition (i.e. the side of the vehicle facing the normal direction of travel). By 'transverse direction' it is meant a horizontal direction perpendicular to the longitudinal direction (i.e. a direction that extends between sides of the vehicle). The term 'forward' means in a direction toward the front of the vehicle. The relative terms 'upper' and 'lower' (or 'above' and 'below') are used to mean relatively further from the ground and relatively closer to the ground, respectively. The term 'front plane' refers to a plane that lies across the y-direction and z-direction. The term 'side plane' refers to a plane that lies across the x-direction and z-direction. The term 'top plane' refers to a plane that lies across the x-direction and y-direction. These terms when referring to components of the vehicle refer to the components as oriented when assembled to the vehicle unless otherwise stated.

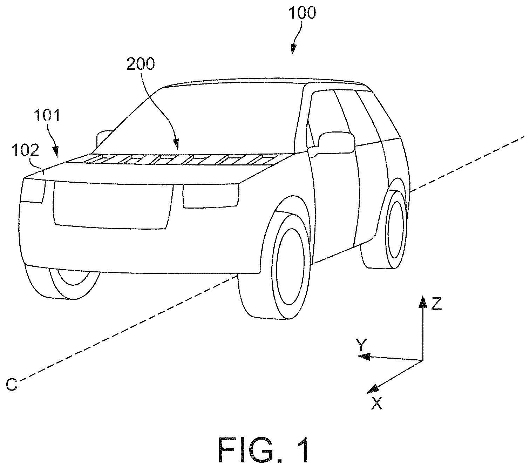

Figure 1 shows a vehicle 100 in accordance with an embodiment of the present invention. The vehicle 100 of Figure 1 is a passenger car, but may be any other type of vehicle to which embodiments described herein may apply such as a pickup truck, van or other type of commercial vehicle. Embodiments of the present disclosure relate to a sub-assembly 101 of the vehicle 100. The sub-assembly 101 comprises a cover assembly 200.

As used herein, the term 'vehicle body' encompasses some parts of the vehicle 100 that make up the vehicle bodywork, which is to say, the (usually) painted exterior surfaces of the finished vehicle 100. The definition used herein includes exterior body panels. The term vehicle body also encompasses a vehicle frame, which is the structural part of the vehicle 100 to which other components of the vehicle 100 are attached, including the exterior body panels, the body closures, the powertrain, subframes for the wheel assemblies and suspension systems, and interior panels.

In the illustrated embodiment of figure 1, the sub-assembly 101 comprises a bonnet 102. The bonnet 102 is a panel that forms the part of the vehicle body that extends between the front of the vehicle and the base of the windscreen. The bonnet 102 may open to provide access to a front engine compartment or storage compartment. The cover assembly 200 is attached to and at least partially overlaps an upper surface of the bonnet 102. In the illustrated embodiments, the portion of the bonnet 102 overlapped by the cover assembly 200 is a rear portion of the bonnet that extends up to a rear edge of the bonnet 102 (herein also referred to as the 'trailing edge' of the bonnet). This means that the cover assembly 200 is disposed adjacent the base of the windscreen. By 'rear portion', it is meant that the portion of the bonnet 102 overlapped by the cover assembly 200 extends from the trailing edge toward the front of the bonnet 102 a distance less than half the total length of the bonnet 102, preferably a distance of between 5% and 20% the total length of the bonnet 102.

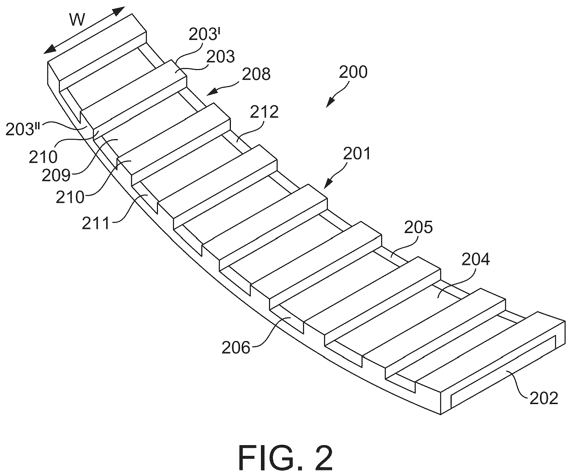

For illustrative purposes, the cover assembly 200 of the embodiment of figure 1 is shown in isolation in figure 2. The cover assembly 200 comprises a grating 201 and a panel 202. The grating 201 comprises a plurality of spaced bars 203 (for simplicity only one of the bars is given a reference sign) that extend in a first direction above an upper surface 204 of the panel 202; and a rib 205 coupling the bars together. The rib 205 is integrally formed with the bars and extends below a lower surface of the bars 203. By having the rib 205 extend below a lower surface of the bars 203, the grating 201 provides channels between the bars that are uninterrupted by the rib 205.

In the illustrated embodiment, the rib 205 extends adjacent a rear edge 203' of the bars 203. A second rib 206 is also provided that extends beneath the bars 203, adjacent a front edge 203" of the bars 203. To distinguish between the ribs, 205, 206, the rib 205 extending adjacent the rear edge 203' of the bars 203 is hereinafter referred to as the rear rib 205, and the rib 206 extending adjacent the front edge 203" of the bars 203 is hereinafter referred to as the front rib 206.

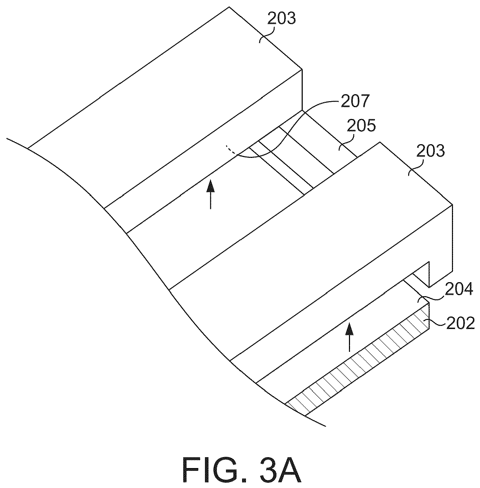

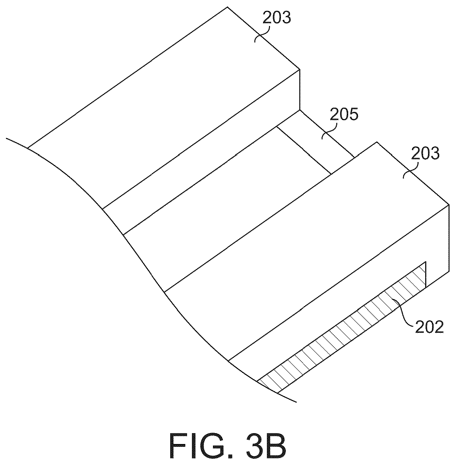

The panel 202 is provided in the space between the front and rear ribs 206, 205. The upper surface 204 of the panel 202 is abutted against the lower surface of the bars 203. The panel 202 and the grating 201 are formed as separate components and assembled as shown in figures 3a and 3b, with the panel being inserted in an upward direction between the front and rear ribs 206, 205 until the upper surface 204 of the panel abuts the lower surface 207 of the bars 203. The panel 202 and grating 201 may be adhered, welded or otherwise attached to each other in any suitable way.

Front and rear ends of the panel 202 are abutted against respective front and rear ribs 206, 205. In this way, the panel 202 extends under the full length of the bars 203. The channels 208 between the bars 203 are defined by a portion of the upper surface 204 of the panel 202, forming part of a floor 209 of the channel 208, and facing lateral surfaces 210 of adjacent bars 203 (a single channel 208 of figure 2 being provided with reference signs for simplicity). The panel 202 acts to stiffen the grating 201 and strengthen the cover assembly 200.

In the illustrated embodiment, upper surfaces 211, 212 of each rib 206, 205 extend between the bars 203 and are flush with the upper surface 204 of the panel 202 to form part of the floor 209 of each channel 208. With the rib upper surfaces 211, 212 being flush with the upper surface 204 of the panel 202, the floor 209 of each channel 208 is planar across the full width W of the cover assembly 200. This means that airflow along each channel 208 caused by operation of the vehicle 100 is uninterrupted by any protrusion that would result if any part of the ribs 206, 205 were above the upper surface 204 of the panel 202.

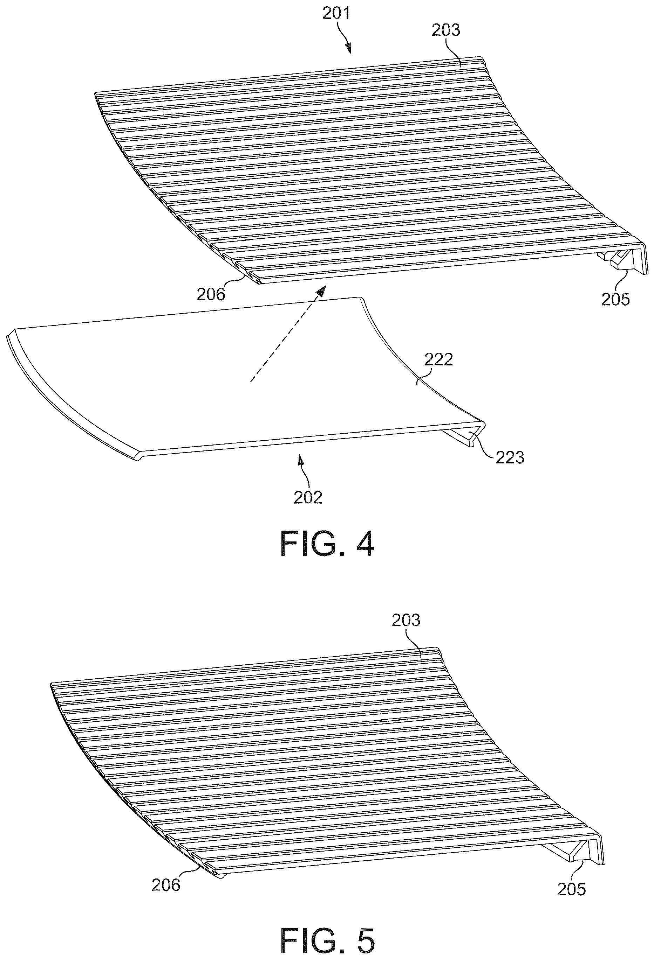

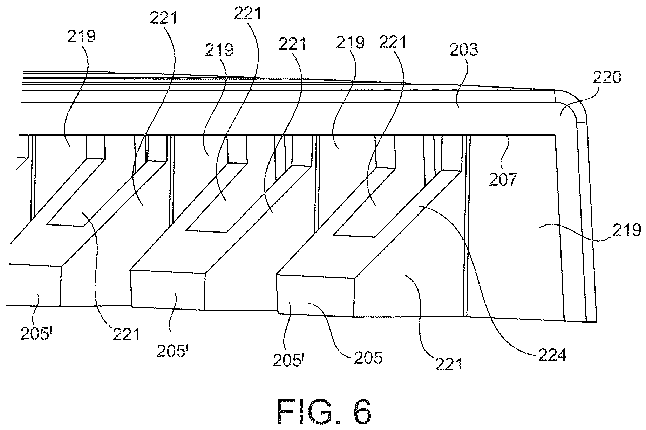

In another embodiment illustrated by figures 4- 6 - like features retaining the same reference numbers - the rear rib 205 is spaced from the lower surface of the bars 203 by legs 219 that extend from a first end 220 of each bar 203 between the lower surface 207 of the bar 203 and the rib 205 (illustrated by figure 6 in which the panel 202 is removed for clarity). Each leg 219 comprises an extending portion 221 that extends under the respective bar 203 from which the leg 219 depends. The rib 205 comprises a plurality of separate connecting elements 205' that extend between adjacent legs 219 to couple together extending portions 221 of adjacent legs 219. This means that the separate connecting elements 205' of the rib 205 are disposed under the lower surface 207 of the bars 203. The cover assembly 200 is configured so that the panel 202 is disposed between the rib 205 and the lower surface 207 of the bars 203. In this way, the rib 205, panel 202 and bars 203 form a sandwich structure that improves the stiffness of the cover assembly 200 while reducing the amount of material required to form the rib 205.

In the embodiment of figures 4-6, the panel 202 comprises a primary panel 222 and a flange 223 that depends at an oblique angle from an edge of the primary panel 222 (as shown in figure 4). The flange 223 abuts an upper edge 224 (the first upper edge 224 being provided with a reference sign in figure 6) of each extending portion 221 of the legs 219, which are sloped accordingly. In this way the panel 202 nests between the rib 205 and the bars 203 as shown in figure 5. The flange 223 provides yet more stiffness to the cover assembly 200. Figure 4 shows how the panel 202 and the grating 201 are assembled. The panel 202 is inserted between ribs 206, 205 of the grating 201 in an oblique upward direction to slot the panel 202 between the extending portions 221 and the bars 203.

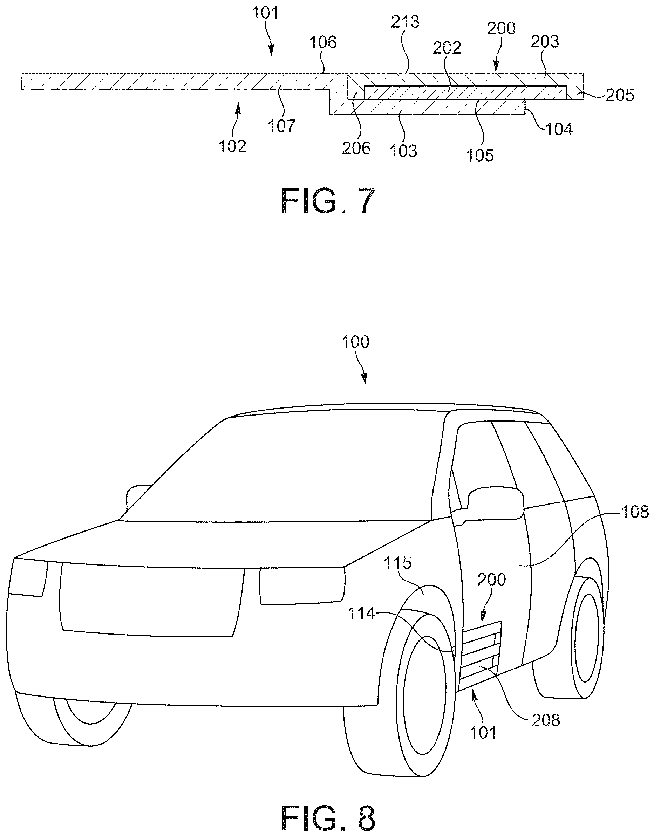

Figure 7 shows a cross section of the bonnet 102 and cover assembly 200 projected in the side plane. The cover assembly 200 is of the embodiment described with reference to figures 1 to 3 but may just as well be the embodiment described with reference to figures 4 to 6. The bonnet 102 comprises a recessed region 103 that extends up to the trailing edge 104. The recessed region 103 is a planar region whose upper surface 105 is lower than the upper surface 106 of the adjacent portion 107 of the bonnet 102 (herein primary bonnet surface 106). The offset between the upper surface 105 of the recessed region 103 and primary bonnet surface 106 is equal to the thickness of the cover assembly 200 so that an upper surface 213 of the cover assembly 200 (upper surface 213 of the bars 203) is flush with the primary bonnet surface 106.

In an embodiment, openings (not shown) may be provided in the bonnet 102 that communicate with the channels 208 in the cover assembly 200. The openings may be configured to direct airflow from under the bonnet 102 and into the channels 208 of the cover assembly 200 during operation of the vehicle 100.

'Operation' of the vehicle 100 may include driving the vehicle 100 at any speed and/or operating a fan system configured to direct airflow from under the bonnet 102 and through the openings. When the vehicle 100 is driven, freestream airflow over the channels 208 may passively assist in evacuating air from under the bonnet 102 by entrainment of air in the channels 208 into the freestream airflow over the vehicle 100.

In embodiments, waste heat from vehicle 100 processes may be directed through the channels 208 and toward the windscreen, heating the airflow over the windscreen. In certain environmental conditions, this may be advantageous in assisting or causing the windscreen to be defrosted or cleared of condensate.

It will be appreciated that the cover assembly 200 may be applied to other parts of the vehicle body, while affording similar advantages as those set out above. In another embodiment of the invention illustrated by figure 8, the vehicle 100 comprises a vehicle sub-assembly 101 comprising the cover assembly 200 and a vehicle passenger door 108. The passenger door 108 is a door 108 that provides access to an interior passenger compartment of the vehicle 100. In this embodiment, the cover assembly 200 differs from the embodiments of figures 1 to 7 only in size and shape. For example, in this embodiment, the grating 201 has three bars 203 to reduce the length of the cover assembly to fit the door 108, but it will be appreciated that the cover assembly 200 may have any number of bars 203 by selecting an appropriate size and spacing for the bars 203.

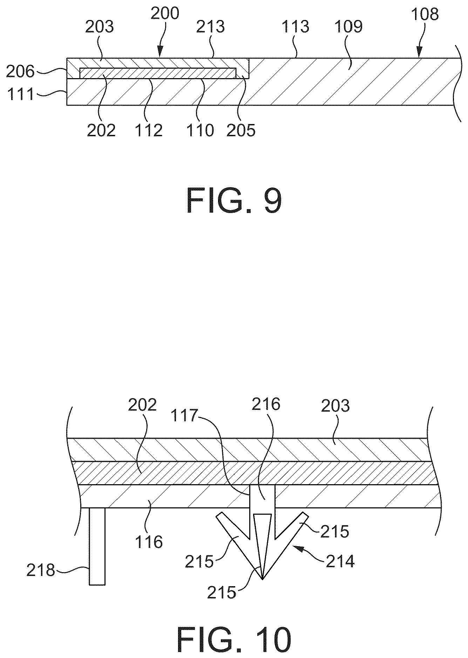

Figure 9 shows a cross section of the embodiment of figure 8 projected in the top plane. The cross section shows an outer panel 109 of the door 108 and the cover assembly 200 attached to the outer panel 109. The outer panel 109 comprises a recessed region 110 that extends up to leading edge 111 of the door 108. By leading edge 111, it is meant the edge of the door 108 that is closest the front of the vehicle 100. The recessed region 110 is a planar region whose upper surface 112 is lower than the upper surface 113 of the adjacent portion of the outer panel 109 (herein primary door panel surface 113). The offset between the upper surface 112 of the recessed region 110 and primary door panel surface 113 is equal to the thickness of the cover assembly 200 so that an upper surface 213 of the cover assembly 200 is flush with the primary door panel surface 113.

The vehicle 100 of the embodiment of figure 8 may be provided with openings 114 in a wheel well 115 that communicates with the channels 208 in the cover assembly 200. In this way, when the vehicle 100 is driven forward at speed, high pressure air in the wheel well 115 may be evacuated through the openings 114 and into the channels 208 to reduce the overall aerodynamic drag of the vehicle 100. The freestream airflow over the channels 208 may passively assist in evacuating air from the wheel well 115 by entrainment of air in the channels 208 into the freestream airflow over the vehicle 100.

The cover assembly 200 may be attached to the bonnet 102, door 108 or any other suitable part of the vehicle body 116 to form the vehicle sub-assembly 101. The cover assembly 200 may be attached to the vehicle body 116 by any suitable means. For example, a lower surface of the ribs 206, 205 or a lower surface of the panel 202 may be adhered to the recessed region 103, 110 of the bonnet 102 or door 108, respectively. Alternatively - and as illustrated by figure 10 - the cover assembly 200 may be attached to the vehicle body 116 by fixings 214 that are configured for insertion through apertures 117 in the vehicle body 116. Figure 10, is a cross section for illustrative purposes only and it will be appreciated that the vehicle body 116 may be any part of the vehicle body, including the bonnet 102 and the door 108 as described above. The fixings 214 are plug-like elements with a compressible outer surface. In the illustrated embodiment, the compressible outer surface is formed from a plurality of resilient elements 215 that extend obliquely outward around a central column 216. The central column 216 depends from the lower surface of the panel 202. The fixings 214 may be integrally formed with the panel 202 or may be separately provided. To assemble the cover assembly 200 to the vehicle body 116, the fixings 214 are pushed through an aperture 117 in the vehicle body 116, causing each resilient element 215 to be deflected toward the column 216. Once the resilient elements 215 have passed through the aperture 117 they spring outward to lock the cover assembly 200 to the vehicle body 116. In addition to the fixings 214, dowels 218 may be used for alignment. For example, the cover panel 202 may further include at least two dowels 218 that depend from its lower surface. The dowels 218 may pass through slots (not shown) in the vehicle body 116, with one dowel 218 passing through a transverse slot and the other a longitudinal slot. The slots are substantially the same width as the dowel diameter so that two dowels 218 can align the cover assembly in both the x and y direction.

The cover assembly 200 of the embodiments described herein provide a simple to manufacture vehicle trim component that can serve several technical functions, particularly where air is needed to be evacuated out of or introduced into cavities within the vehicle body. The cover assembly 200 is adaptable to several vehicle body features including, but not limited to, the bonnet 102 and passenger door 108 of the embodiments described herein.

The following numbered statements form part of the disclosure, but do not form part of the claims.
1. According to an aspect of the invention there is provided a cover assembly comprising a grating and a panel, the grating comprising:
   a plurality of spaced bars that extend in a first direction above an upper surface of the panel, and
   a rib coupling the bars together, the rib extending below a lower surface of the bars and being arranged so that an upper surface of the rib is disposed flush with or below the upper surface of the panel.
2. The cover assembly of statement 1, wherein the rib is spaced from the lower surface of the bars by legs that extend from a first end of each bar between the lower surface and the rib.
3. The cover assembly of statement 2, wherein each leg comprises an extending portion that extends under the respective bar from which the leg depends, and wherein the rib couples together rearward extending portions of adjacent legs.
4. The cover assembly of statement 2 or 3, wherein the rib comprises a plurality of separate connecting elements that extend between adjacent legs.
5. The cover assembly of any preceding statement, wherein the cover assembly is configured so that the panel is disposed between the rib and the lower surface of the bars.
6. The cover assembly of statement 5, wherein the panel abuts the rib.
7. The cover assembly of statement 6, wherein the panel comprises a primary panel and a flange that depends at an oblique angle from an edge of the primary panel, and wherein the flange abuts an upper edge of each rearward extending portion of the legs.
8. The cover assembly of any preceding statement, wherein the rib is integrally formed with the bars.
9. The cover assembly of claim any preceding statement, wherein the upper surface of the panel abuts the lower surface of the bars.
10. According to another aspect of the invention there is provided a sub-assembly comprising the cover assembly of any of statements 1 to 9 and a body member of a road going vehicle.
11. The sub-assembly of statement 10, wherein the body member is a bonnet.
12. The sub-assembly of statement 10, wherein the body member is a passenger door.
13. The sub-assembly of any of statements 10 to 12, wherein the cover assembly comprises fixings that depend from the lower surface of the panel, the fixings extending through apertures in the body member to retain the cover assembly to the body member.
14. The sub-assembly of statement 13, wherein the fixings comprise resilient elements that are displaceable to allow the fixing to be passed through a respective aperture when the cover assembly is attached to the body member.
15. The sub-assembly of statement 14 when dependent on statement 11, wherein the portion of the bonnet overlapped by the cover assembly extends up to a trailing edge of the bonnet.
16. According to another aspect of the invention there is provided a road going vehicle comprising the sub assembly of any of statements 10 to 15.

It will be appreciated that various changes and modifications can be made to the present invention without departing from the scope of the present application.

## Claims

1. A vehicle sub-assembly comprising a cover assembly and a bonnet, the cover assembly being attached to and at least partially overlapping a portion of the bonnet, wherein the cover assembly comprises:
a grating and a panel, the grating comprising:
a plurality of spaced bars that extend in a first direction above an upper surface of the panel, and
a rib coupling the bars together, the rib extending below a lower surface of the bars and being arranged so that an upper surface of the rib is disposed flush with or below the upper surface of the panel.

2. The sub-assembly of claim 1, wherein the rib is spaced from the lower surface of the bars by legs that extend from a first end of each bar between the lower surface and the rib.

3. The sub-assembly of claim 2, wherein each leg comprises an extending portion that extends under the respective bar from which the leg depends, and wherein the rib couples together the extending portions of adjacent legs.

4. The sub-assembly of claim 2 or 3, wherein the rib comprises a plurality of separate connecting elements that extend between adjacent legs.

5. The sub-assembly of any preceding claim, wherein the cover assembly is configured so that the panel is disposed between the rib and the lower surface of the bars.

6. The sub-assembly assembly of claim 5, wherein the panel abuts the rib.

7. The sub-assembly of claim 6, wherein the panel comprises a primary panel and a flange that depends at an oblique angle from an edge of the primary panel, and wherein the flange abuts an upper edge of each extending portion of the legs.

8. The sub-assembly of any preceding claim, wherein the rib is integrally formed with the bars.

9. The sub-assembly of any preceding claim, wherein the upper surface of the panel abuts the lower surface of the bars.

10. The sub-assembly of any preceding claim, wherein the cover assembly comprises fixings that depend from the lower surface of the panel, the fixings extending through apertures in the bonnet to retain the cover assembly to the bonnet.

11. The sub-assembly of claim 10, wherein the fixings comprise resilient elements that are displaceable to allow the fixing to be passed through a respective aperture when the cover assembly is attached to the bonnet.

12. The sub-assembly of any preceding claim, wherein the portion of the bonnet overlapped by the cover assembly extends up to a trailing edge of the bonnet.

13. The sub-assembly of claim 12, wherein the portion of the bonnet overlapped by the cover assembly is a rear portion of the bonnet.

14. A vehicle comprising the sub assembly of any preceding claim.
